# EUROPEAN PATENT SPECIFICATION

(11) **EP 0 857 633 B1**
(45) Date of publication and mention of the grant of the patent: **02.10.2002**
(21) Application number: 98102303.9
(22) Date of filing: 10.02.1998
(51) Int. Cl.: B60T 7/10, F16C 1/26

(54) **A cable control device, in particular for a parking brake of a vehicle**
Seilzugbedienungsvorrichtung, insbesondere für eine Fahrzeugfeststellbremse
Dispositif de commande d'un câble, notamment pour frein de stationnement d'un véhicule

(30) Priority: 11.02.1997 IT TO970105
(43) Date of publication of application: 12.08.1998
(73) Proprietor: IVECO FIAT S.p.A., 10156 Torino (IT)
(72) Inventor: Maffessoli, Roberto, 25064 Gussago (IT)
(74) Representative: Franzolin, Luigi

(56) References cited:
- EP-A- 0 608 159
- FR-A- 2 636 106
- FR-A- 2 696 519
- US-A- 4 333 361

## Description

The present invention relates to a control device with a flexible cable, in particular for actuating a parking brake of a vehicle.

Manual control devices are known, which essentially comprise a support structure, a movable manually operated member and a flexible cable formed by a sheath having one end connected to the support structure and by a core sliding in the sheath and having one end connected to the operating member.

The movable member generally comprises a lever hinged to the support structure; therefore, said lever imparts to the end of the cable core a curvilinear trajectory. Moreover, the lever can be provided with a cam-type guide for the cable so as to make it possible to vary continuously the resistance of the lever along its travel.

In any case, the direction of the end of the core varies along the travel of the lever; this means that the section of core at the outlet from the sheath undergoes a sudden localised deflection and continuous sliding with the end of the sheath. Therefore, the operating conditions of the core are not optimum either with respect to kinematics or with respect to wear.

FR-A-2636106 discloses a cable control device having the features of the preamble of claim 1. In particular, such a document discloses a cable control device in which a bracket secured to one end of the cable sheath is hinged to a two-part support structure defining bores for respective pivots of the bracket. The support structure must be disassembled to allow the bracket to be installed.
This makes assembly of the device difficult and inconvenient, which makes the known control device unfit for use in a motor vehicle.
An object of the present invention is to provide a control device which is free of the drawbacks associated with the aforementioned known devices.

This object is achieved by the features of the characterizing part of claim 1.

With a view to a better understanding of the present invention a preferred embodiment will now be described non-restrictively by way of example below and with reference to the accompanying drawings, in which:
Figure 1 is a view in side elevation of a manual control device for a parking brake designed in accordance with the present invention;
Figure 2 illustrates a detail of Figure 1, on an enlarged scale and partly in section;
Figure 3 is a section along the line III-III in Figure 1;
Figure 4 is a section along the line IV-IV in Figure 2;
Figure 5 is a side view of a detail of Figure 2;
Figure 6 is a front view of the detail of Figure 5;
Figure 7 illustrates a detail of the device in Figure 1, on an enlarged scale and partly in section, and
Figure 8 is a view in perspective of a detail of Figure 7.

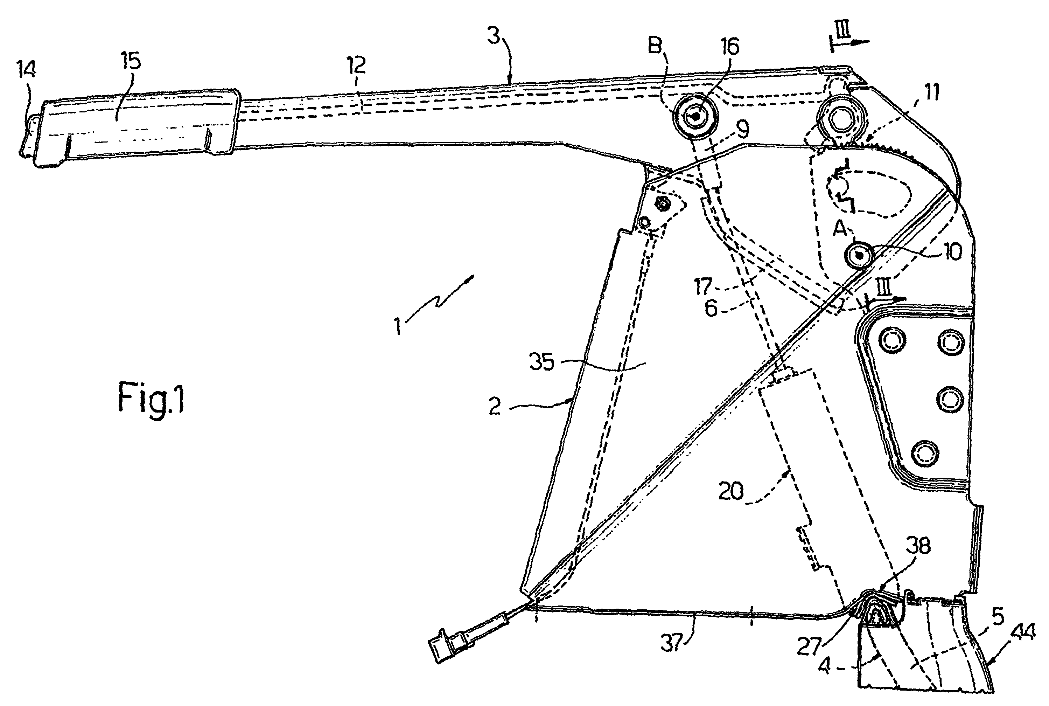

With reference to Figure 1, the reference numeral 1 generally denotes a control device for a parking brake for a vehicle.

The device 1 comprises, in known manner, a support structure 2 adapted to be secured to the vehicle body, a manually operated lever 3 hinged to the structure 2 by means of a pivot 10 with a horizontal axis A, and a flexible transmission cable 4.

The cable 4, of coaxial or "Bowden" type, comprises a sheath 5 and a core 6 sliding inside the sheath 5. The sheath 5 has a first end portion 7 connected to the structure 2 in a manner to be described below, and an opposite end (not shown) connected to a fixed part of the vehicle in the vicinity of the brake (not shown) operated by the device 1. The core 6 has a first end portion 8 which is connected to the lever 3 by means of an eye-type terminal member 9 crimped thereon, and a second end portion (not shown) adapted to be connected to an actuator member (not shown) of the brake.

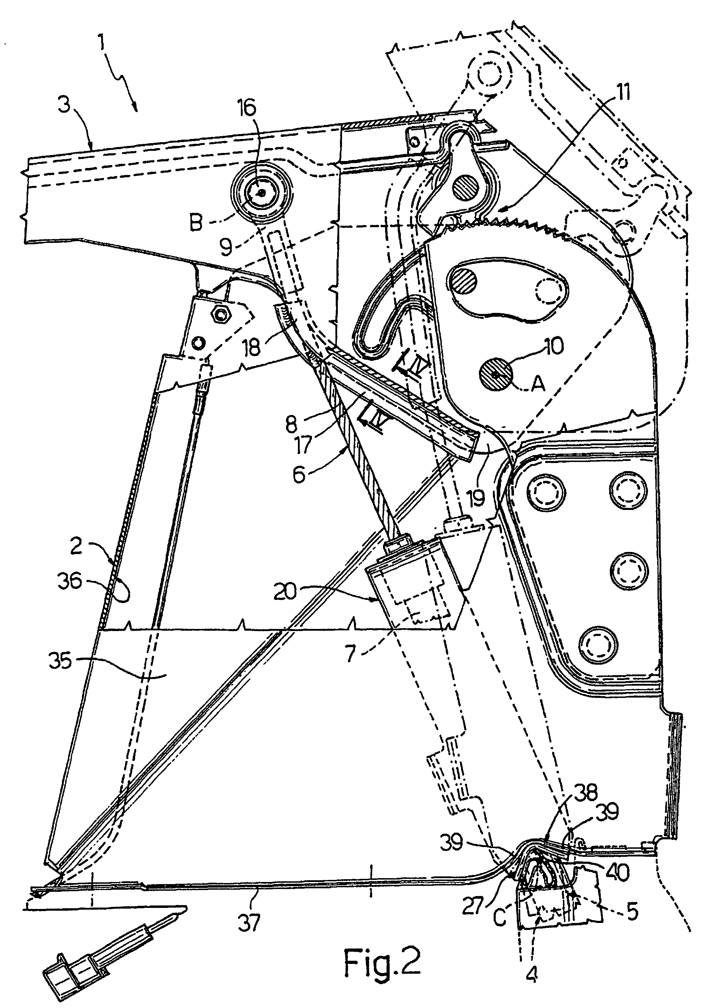

The lever 3 can move, in a known manner, between a first inoperative position shown in solid line in Figure 1 and in Figure 2, in which the brake is released, and a second, operative position illustrated in Figure 2 in chain line.

Between the lever 3 and the structure 2 there is provided a ratchet gear 11 which can be disengaged by means of a release rod 12 actuated by a push-button 14 disposed at a free end 15 of the lever itself; the ratchet gear 11 connects the lever 3 unidirectionally to the structure 2 so as to prevent the lever, in any position thereof, from returning into the inoperative position under the reaction exerted by the cable 4.

The terminal member 9 of the core 6 is connected to the lever by means of a pivot 16 with an axis B parallel to the axis A and displaced with respect thereto towards the end 15 of the lever 3 which, therefore, is of the aforementioned second type.

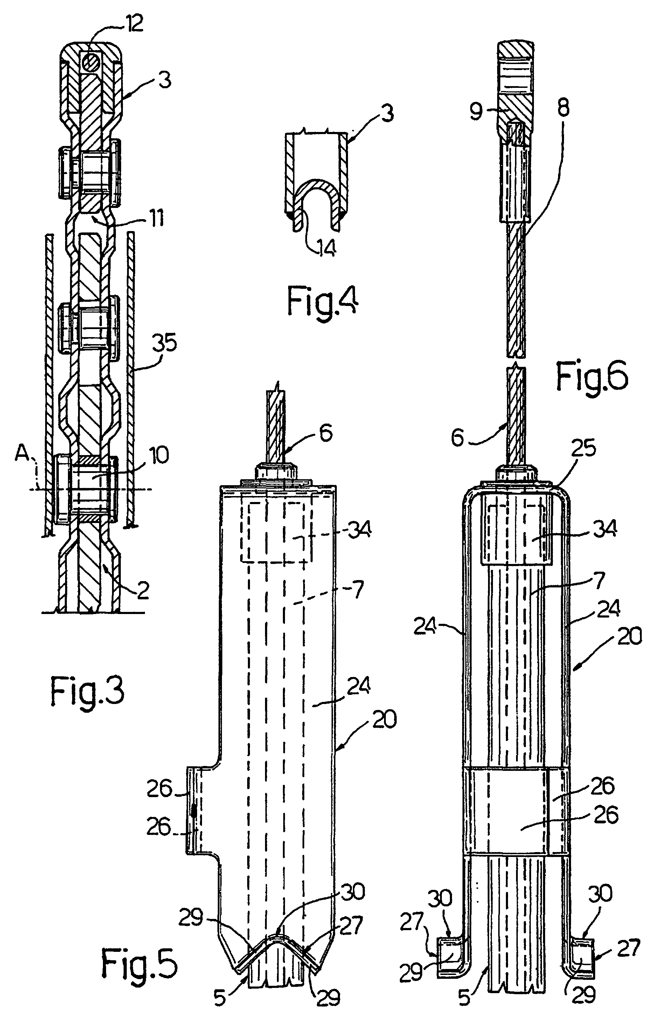

The lever 3 is provided with a cam member 17 cooperating with the end portion 8 of the core 6 so as to vary, along the travel of the lever 3, the resistance of the lever itself. In particular, the member 17 is of arcuate shape concave towards the axis A (Figure 2) and of C-shaped section (Figure 4), and it extends, with reference to the inoperative position of the lever 3, from a zone 18 of the latter situated below the pivot 16 as far as a zone 19 arranged substantially below the pivot 10, at a progressively decreasing distance from the axis A. The end portion 8 of the core 6 is partly accommodated inside the member 17, for a section of variable length depending on the position of the lever 3, and it co-operates therewith to define a resistance of the lever 3 which can vary from a maximum value corresponding to the released position of the brake, to a minimum value corresponding to the position of maximum actuation of the brake itself (Figure 2). Therefore, a first part of the travel of the lever 3 corresponds to a relative large travel of the core 6, whereas in the final part of the travel the displacement of the core is reduced but there is advantageous multiplication of the load.

As is clearly evident from Figure 2, the direction of the end portion 8 of the core 6 at the outlet from the sheath is continuously variable, as the position of the lever 3 varies.

According to the present invention, the end portion 7 of the sheath 5 is accommodated in a support bracket 20 connected to the structure 2 in such a way that it can pivot so as to be aligned substantially with the end portion 8 of the core 6, as the position of the lever 3 varies.

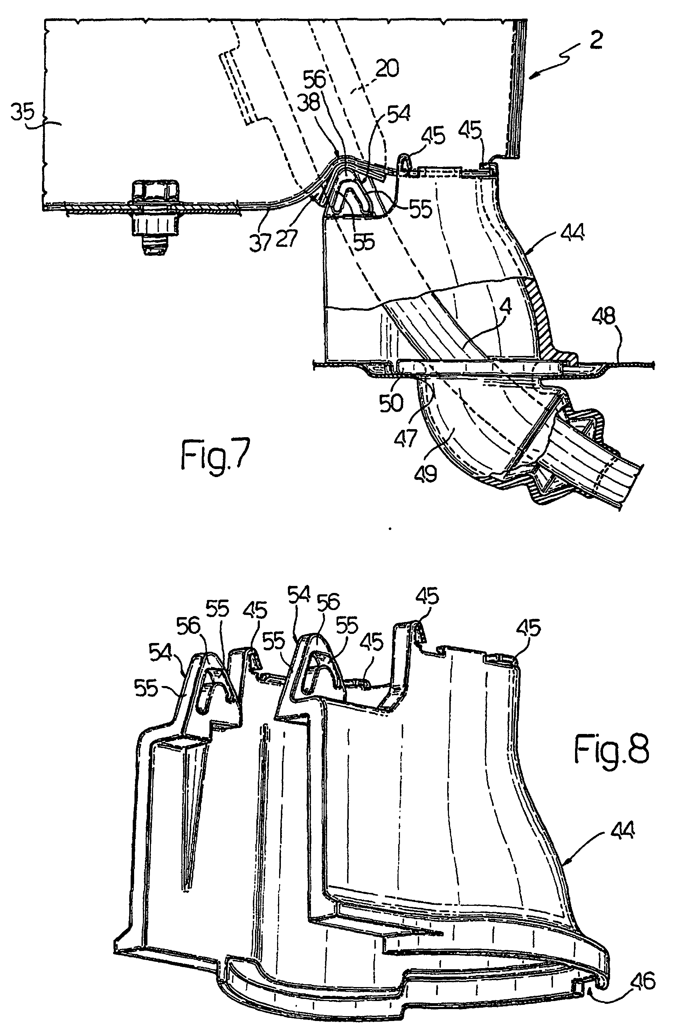

The bracket 20, shown in detail in Figures 5 and 6, is of substantially elongated U-shaped, and comprises a pair of parallel mutually facing side walls 24, and an intermediate transverse wall 25 integrally connecting together respective ends of the side walls 24. Respective projections 26 extend from an intermediate zone of the walls 24, which projections are folded at 90° one on to another and welded together so as to impart structural rigidity to the bracket 20.

Respective end portions of the walls 24 opposite the wall 25 are bent outwards and are shaped so as to define respective supports 27 for the bracket 20 with the structure 2.

The supports 27 are of arcuate shape and each comprise a pair of flat flanks 29 which are orthogonal to the plane in which the respective wall 24 lies and which are mutually convergent towards a substantially cylindrical connecting surface 30 with its convexity turned towards the wall 25.

The wall 25 has hole 31 in which is accommodated and located a cap 34 secured to the end portion 7 of the sheath 5. The core 6 of the cable 4 is fitted so as to pass through the cap 34.

The support structure 2 of the device 1 comprises an outer hollow body 35 which is open upwardly and downwardly and is trapezium-shaped in elevation and which is flattened in transverse direction, thereby defining in its interior a cavity 36 in which are accommodated the bracket 20 and the end portion 8 of the core 6 extending from the latter towards the lever 3.

In particular, the structure 2 has a base flange 37 designed to be fixed to the platform of the vehicle's interior compartment (not shown). The bracket 20 extends downwards from the body 35 with its supports 27 which cooperate at the bottom with respective support cradles 38 provided on opposite sides of the flange 37.

Each cradle 38 has a pair of substantially flat flanks 39 forming between them an angle, which is larger than that defined by the flanks 29 of the supports 27, and mutually converging towards a substantially cylindrical connecting surface 40 with a downwardly facing concavity. The surface 40 co-operates with the connecting surface 30 of the associated support, thereby enabling the bracket 20 to pivot about an axis defined by the axis of the surfaces 30,40 and, therefore, defining a substantially pivot-type connection between the structure 2 and the bracket 20.

The bracket 20 is maintained in contact with the cradles 38 of the structure 2, even if the cable 4 is not under tension, by a shield member 44 interposed between the flange 37 and a fixed wall 48 forming part of the vehicle body and extending below the flange 37 and spaced apart therefrom.

The member 44 is of downwardly flared shape and is open at the front, as is clearly evident from Figure 8. The member 44 has a plurality of upper coupling and locating projections 45 connecting the member itself to the flange 37; at the bottom the member 44 has a bayonet-type fastening 46 arranged in alignment with a seating 47 provided in the wall 48 in which is fitted a bellows-type sleeve 49 for guiding the cable 4, which extends projecting downwards.

The sleeve 49 is provided with an upper flange 50 co-operating axially with the wall 48, on the upper face of the latter along the periphery of the seating 47. The flange 50 has engagement means, of known type and not shown, which co-operate with the bayonet-type fastening 46 of the member 44 so as to connect the sleeve 49 rigidly to the latter.

Finally, the member 44 is provided with a pair of elastic elements 54 co-operating under preloading with the supports 27 so as to maintain the latter in contact with the respective cradles 38 even when the cable 4 is not under tension. The elastic elements 54 are of substantially inverted V-shape, with respective end portions 55 integrally connected to the member 44 and with an intermediate top portion 56 arranged in contact with the associated support 27.

The mode of operation of the device 1 is as follows:

When the lever 3 is raised manually, i.e. rotated in a clockwise direction with reference to Figures 1 and 2 from the inoperative position towards to the actuating position, a tensile force is exerted on the core 6 of the cable 4, which is transmitted to the brake in a known manner and, therefore, it will not be described in greater detail.

However, the rotation of the lever brings about a variation in the direction of the end portion 8 of the core 6, as is clearly evident from Figure 2.

Since the bracket 20 is connected to the structure 2 so that it can pivot, as a result of the above-described configuration of the supports 27 and of the associated cradles 38, it is aligned with the direction of the end portion 8 of the core 6; therefore, at the outlet from the sheath 5 the core 6 does not undergo any sudden deviation.

The advantages which can be achieved with the present invention are evident from a study of the features of the device designed in accordance therewith.

Since the end portion 7 of the sheath 5 is supported by the bracket 20 which, in turn, can pivot with respect to the structure 2, the core 6 of the cable 4 does not undergo localised deformation at the outlet from the sheath 5, thereby obviating the danger of premature wear and breakage of the core 6.

Furthermore, the installation of the bracket 20 on the structure 2 according to the embodiment described is particularly simple and convenient.

Finally, it is evident that the device 1 described above can undergo modifications and variants which do not depart from the scope of the claims.

In particular, the connection of the end portion 7 of the sheath 5 to the structure 2 can be effected with any means which is adapted to enable the portion 7 itself to pivot, as the position of the lever 3 varies.

## Claims

1. A cable control device (1), in particular for a parking brake of a vehicle, comprising a support structure (2), a movable manually operated member (3), a flexible cable (4) formed by a sheath (5) having one end portion (7) connected to said support structure (2) and by a core (6) sliding in said sheath (5) and having an end portion connected to said operating member (3), and pivoting connecting means interposed between said end portion (7) of said sheath (5) and said support structure (2) and adapted to make possible a substantial alignment of said end portion (7) of said sheath (5) with said end portion of said core (6), as the position of said operating member (3) varies,
said pivoting connecting means comprising a bracket (20) secured to said end portion (7) of said sheath (5) and able to pivot with respect to said support structure (2),
first support means (27) carried by said bracket (20) and second support means (38) carried by said support structure (2) and co-operating with said first support means (27), said first and second support means (27,38) having respective mating surfaces (30,40) of rounded shape to make possible substantially a rotation of said bracket (20) with respect to said support structure (2), **characterized in that** said pivoting connecting means include thrust means (44) connected to said support structure (2) and cooperating with said bracket (20) for ensuring the contact between said first support means (27) and said second support means (38).

2. A device according to claim 1, **characterised in that** said thrust means (44) comprise elastic means (54) cooperating with said bracket (20).

3. A device according to claim 1 or 2, **characterised in that** said first support means comprise a pair of arcuate supports (27) of said bracket (20), and **in that** said second support means comprise a pair of respective cradle portions (38) of said support structure (2).

4. A device according to claim 3, **characterised in that** said cradle portions (38) have a downwardly facing concavity, and **in that** said arcuate supports (27) cooperate at the bottom with said cradle portions (38).

5. A device according to claim 4, **characterised in that** said thrust means comprise a shield member (44) connected to the support structure (2) and disposed around said cable (4).

6. A device according to claims 2 to 5, **characterised in that** said elastic means comprise a pair of flexible elements (54) integral with said shield member (44) and cooperating in a preloaded manner with said arcuate supports (27) for said bracket (20).

7. A device according to claim 6, **characterised in that** said flexible elements (54) are substantially V-shaped and have respective ends (55) integrally connected to said shield member (44) and an intermediate top portion (56) cooperating with a respective arcuate support (27).

## Patentansprüche

1. Eine Seilkontrollvorrichtung (1), insbesondere für eine Feststellbremse eines Fahrzeugs, umfassend eine Stützstruktur (2), ein bewegliches manuell betätigtes Element (3), ein flexibles Seil (4), das durch eine Ummantelung (5), welche einen Endabschnitt (7) besitzt, welche mit der Stützstruktur (2) verbunden ist, und durch einen Kern (6), der in der Ummantelung (5) gleitet und einen Endabschnitt besitzt, der mit dem Bedienelement (3) verbunden ist, geformt ist, und schwenkbare Verbindungsmittel, die zwischen dem Endabschnitt (7) der Ummantelung (5) und der Stützstruktur (2) angeordnet und dazu ausgelegt sind, ein substantielles Wesentliches Fluchten des Endabschnitts (7) der Ummantelung (5) mit dem Endabschnitt des Kerns (6) zu ermöglichen, wenn sich die Position des Bedienelements (3) verändert, wobei das schwenkbare Verbindungsmittel einen Arm (20) umfasst, der an dem Endabschnitt (7) der Ummantelung (5) befestigt und dazu geeignet ist, in Bezug auf die Stützstruktur (2) zu schwenken, erste Haltemittel (27), die durch den Arm (20) getragen sind, und zweite Haltemittel (38), die durch die Stützstruktur (2) getragen sind und mit den ersten Haltemitteln (27) zusammenwirken, wobei die ersten und zweiten Haltemittel (27, 38) jeweils zusammenpassende Flächen (30, 40) von gerundeter Form besitzen, um im Wesentlichen eine Rotation des Arms (20) in Bezug zu der Stützstruktur (2) zu ermöglichen,
**dadurch gekennzeichnet, dass**
die schwenkbaren Verbindungsmittel beinhalten:
Schubmittel (44), die mit der Stützstruktur (2) verbunden sind und mit dem Arm (20) zusammenwirken, zum Sicherstellen des Kontakts zwischen den ersten Haltemitteln (27) und den zweiten Haltemitteln (38).

2. Eine Vorrichtung nach Anspruch 1, **dadurch gekennzeichnet, dass** die Schubmittel (44) elastische Mittel (54) umfassen, welche mit dem Arm (20) zusammenwirken.

3. Eine Vorrichtung nach Anspruch 1 oder 2, **dadurch gekennzeichnet, dass** die ersten Haltemittel ein Paar von bogenförmigen Halterungen (27) des Hebels (20) umfassen, und dass die zweiten Haltemittel ein Paar von jeweiligen Gabelabschnitten (38) der Stützstruktur (2) umfassen.

4. Eine Vorrichtung nach Anspruch 3, **dadurch gekennzeichnet, dass** die Gabelabschnitte (38) eine nach unten weisende Höhlung besitzen, und dass die bogenförmigen Halterungen (27) an dem Boden mit den Gabelabschnitten (38) zusammenwirken.

5. Eine Vorrichtung nach Anspruch 4, **dadurch gekennzeichnet, dass** die Schubmittel ein Abschirmungselement (44) umfassen, welches mit der Stützstruktur (2) verbunden und um das Seil (4) herum angeordnet ist.

6. Eine Vorrichtung nach den Ansprüchen 2 bis 5, **dadurch gekennzeichnet, dass** die elastischen Mittel ein Paar von flexiblen Elementen (54) umfassen, welche integral mit dem Abschirmungselement (44) sind und in einer vorgespannten Art und Weise mit den bogenförmigen Halterungen (27) für den Hebel (20) zusammenwirken.

7. Eine Vorrichtung nach Anspruch 6, **dadurch gekennzeichnet, dass** die flexiblen Elemente (54) im Wesentlichen V-förmig sind und jeweilige Enden (55), die integral mit dem Abschirmungselement (24) verbunden sind, und einen oberen Zwischenabschnitt (56) besitzen, der mit einer jeweiligen bogenförmigen Halterung (27) zusammenwirkt.

## Revendications

1. Dispositif de commande de câble (1), en particulier pour un frein de stationnement d'un véhicule, comprenant une structure de support (2), un élément mobile commandé manuellement (3), un câble flexible (4) formé par une gaine (5) comportant une première partie d'extrémité (7) reliée à ladite structure de support (2) et par une âme (6) coulissant dans ladite gaine (5) et présentant une partie d'extrémité reliée audit élément de commande (3), et des moyens de liaison pivotants interposés entre ladite partie d'extrémité (7) de ladite gaine (5) et ladite structure de support (2) et adaptés afin de permettre sensiblement un alignement de ladite partie d'extrémité (7) de ladite gaine (5) avec ladite partie d'extrémité de ladite âme (6), lorsque la position dudit élément de commande (3) varie,
lesdits moyens de liaison pivotants comprenant un étrier (20) fixé sur ladite partie d'extrémité (7) de ladite gaine (5) et pouvant pivoter par rapport à ladite structure de support (2),
des premiers moyens de support (27) supportés par ledit étrier (20) et des seconds moyens de support (38) supportés par ladite structure de support (2) et coopérant avec lesdits premiers moyens de support (27), lesdits premiers et seconds moyens de support (27, 38) présentant des surfaces complémentaires respectives (30, 40) de forme arrondie afin de permettre sensiblement une rotation dudit étrier (20) par rapport à ladite structure de support (2), **caractérisé en ce que** lesdits moyens de liaison pivotants comprennent un moyen d'application (44) relié à ladite structure de support (2) et coopérant avec ledit étrier (20) afin d'assurer le contact entre lesdits premiers moyens de support (27) et lesdits seconds moyens de support (38).

2. Dispositif selon la revendication 1, **caractérisé en ce que** ledit moyen d'application (44) comprend des moyens élastiques (54) coopérant avec ledit étrier (20).

3. Dispositif selon la revendication 1 ou 2, **caractérisé en ce que** lesdits premiers moyens de support comprennent une paire de supports courbes (27) dudit étrier (20), et **en ce que** lesdits seconds moyens de support comprennent une paire de parties formant berceau (38) respectives de ladite structure de support (2).

4. Dispositif selon la revendication 3, **caractérisé en ce que** lesdites parties formant berceau (38) présentent une concavité orientée vers le bas, et **en ce que** lesdits supports courbes (27) coopèrent à la partie inférieure avec lesdites parties formant berceau (38).

5. Dispositif selon la revendication 4, **caractérisé en ce que** ledit moyen d'application comprend un élément formant carter de protection (44) relié à la structure de support (2) et disposé autour dudit câble (4).

6. Dispositif selon les revendications 2 à 5, **caractérisé en ce que** lesdits moyens élastiques comprennent une paire d'éléments flexibles (54) venus de matière avec ledit élément formant carter de protection (44) et coopérant à l'état préchargé avec lesdits supports courbes (27) dudit étrier (20).

7. Dispositif selon la revendication 6, **caractérisé en ce que** lesdits éléments flexibles (54) sont sensiblement en forme de V et comportent des extrémités (55) respectives reliées intégralement audit élément formant carter de protection (44) et une partie supérieure intermédiaire (56) coopérant avec un support courbe respectif (27).
